Europäisches Patentamt

European Patent Office

Office européen des brevets

(19)

(11) **EP 0 802 671 B1**

(12) **EUROPEAN PATENT SPECIFICATION**

(45) Date of publication and mention
of the grant of the patent:
**01.03.2000  Bulletin 2000/09**

(51) Int Cl.⁷: **H04N 5/44**

(21) Application number: **96106130.6**

(22) Date of filing: **18.04.1996**

(54) **Digital signal processing circuit for a television receiver**

Digitale Signalverarbeitungsschaltung für einen Fernsehempfänger

Circuit de traitement de signal digital pour un récepteur de télévision

(84) Designated Contracting States:
**DE FR GB IT**

(43) Date of publication of application:
**22.10.1997  Bulletin 1997/43**

(73) Proprietor: **MATSUSHITA ELECTRIC INDUSTRIAL
CO., LTD.
Osaka 571 (JP)**

(72) Inventors:
• **Hinrichs, Timm
64287 Darmstadt (DE)**
• **Schu, Markus
85435 Erding (DE)**
• **Geissel, Michael
63743 Aschaffenburg-Obernau (DE)**
• **Singer, Rolf
8048 Zürich (CH)**

(74) Representative: **Grünecker, Kinkeldey,
Stockmair & Schwanhäusser Anwaltssozietät
Maximilianstrasse 58
80538 München (DE)**

(56) References cited:
**EP-A- 0 514 819          EP-A- 0 630 154
WO-A-91/19393**

• **PATENT ABSTRACTS OF JAPAN vol. 017, no.
203 (E-1354), 21 April 1993 & JP-A-04 345389
(HITACHI LTD;OTHERS: 01), 1 December 1992,**

**Description**

The present invention relates to a digital signal processing circuit for a television receiver, which circuit supports up-conversion and digital zooming.

Zooming in this context means to expand a picture, or a portion of a picture, by adding additional lines to the picture, said lines being generated according to interpolation techniques. Zooming may, in particular, be used to convert a picture transmitted in the letterbox format, into a picture covering the whole screen.

In regard to up-conversion there are currently two, common, approaches. One is the so-called 100/120 Hz interlaced scanning approach, the other is the so-called 50/60 Hz progressive scan conversion approach.

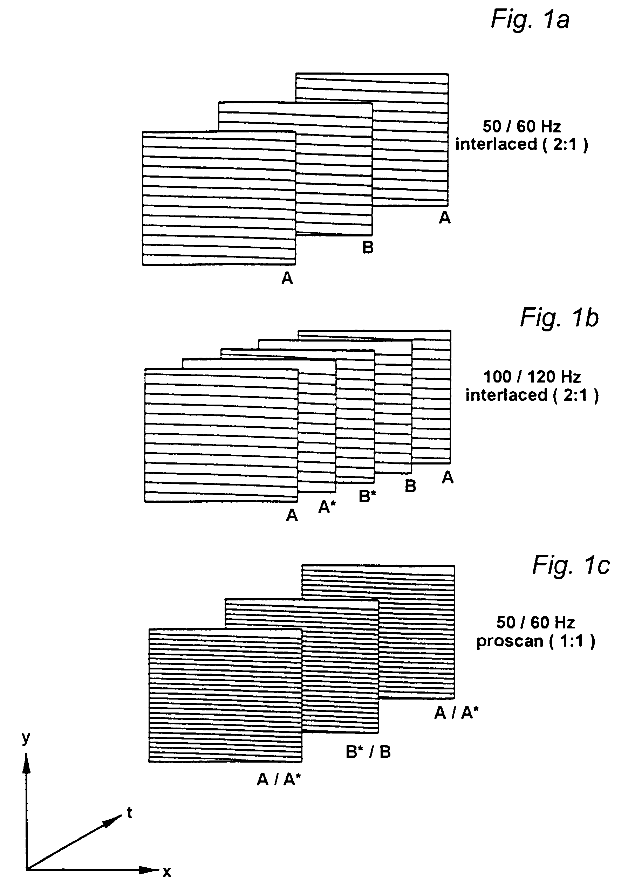

Figures 1b and 1c illustrate the principle of these two techniques, whereas Figure 1a illustrates traditional 50/60 Hz interlaced scanning.

According to traditional 50/60 Hz interlaced scanning, every picture (frame) is divided into two fields, one field comprising the odd lines of the complete frame, the other field comprising even lines of the complete frame. The two fields A and B, forming together a full frame, are displayed at successive times, which is illustrated in Figure 1 by the field sequence A,B,A,....

The 100/120 Hz interlaced scanning technique differs from the traditional 50/60 Hz interlaced scanning in that four timely successive fields are displayed during one frame period. In the simplest form, this can be achieved by field repetition leading to field sequence of A,A,B,B,.... Such simple repetition of the fields reduces only the large area flicker, the line flicker is the same or even increased compared with a normal 50/60 Hz interlaced display. A second form is achieved by frame repetition leading to field sequence A,B,A,B,.... This method leads to acceptable results in case of pictures that are practically without motion (still picture). In order to enhance the picture quality achievable with 100/120 Hz interlaced scanning, it is proposed that motion adaptive filtering is used, in that generation of additional fields is performed, dependent on the amount of motion contained in the picture. This is illustrated in Figure 1b, by the sequence AA\*,BB\*....If motion is existent, fields A and B are not merely repeated, but the additional fields A\*, B\* are generated, dependent on the amount of motion present in the picture.

Figure 1c illustrates the 50/60 Hz progressive scanning technique. According to this technique, to each field A,B, the respective missing odd or even lines are added, so that two interlaced fields, A/A\*, B\*/B, are simultaneously displayed.

From EP-A2-0 514 819 a television receiver is known which has mode setting means for setting a display mode and further aspect ratio converting means. The aspect ratio converting means is set to one of a plurality of conversion modes or display magnification modes in accordance with the output signal from said mode setting means. Said aspect ratio converting means converts a video signal of a non-wide aspect ratio into a signal of a wide aspect ratio suitable for being displayed on a wide aspect ratio screen. The interpolation is carried out using a field memory and a line memory, two coefficient multipliers and an adder. The field memory receives a video signal and puts out the delayed video signal. The line memory receives and delays the video signal outputted by said field memory. The video signals outputted by said field memory and said line memory are weighted by said coefficient multipliers according to predetermined coefficients, respectively. Finally, both weighted signals are added in order to provide an interpolated video signal.

It is the object of the present invention to provide a digital signal processing circuit for a television receiver, which circuit combines up-conversion processing with zooming processing, whereby the circuit may be realised using relatively simple hardware.

This object is solved by the subject matter of present claim 1.

Preferred embodiments of the present invention are the subject matter of the dependent claims to claim 1.

In the following a preferred embodiment of the present invention is described in detail, in connection with the accompanying drawings, which show:

Fig. 1a-c illustrations for describing traditional 50/60 Hz interlaced scanning, 100/120 Hz interlaced scanning and 50/60 Hz progressive scanning,

Fig. 2 a schematic diagram of a circuit combining up-conversion-, zooming- and panning-capabilities,

Fig. 3 a schematic diagram of a circuit combining motion dependent up-conversion-, zooming- and panning-capabilities, and

Figs 4 & 5 diagrams for illustrating the operation of the phase accumulation means.

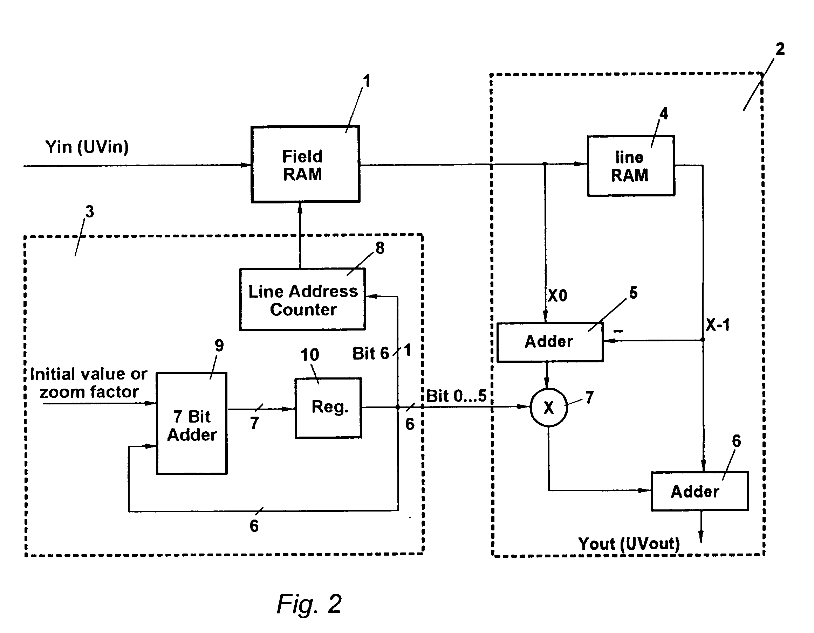

The circuit according to Figure 2 basically comprises three main units, namely a field memory 1, a filter unit 2 and a control unit 3. Field memory 1, which is preferably a field RAM, stores one field of an incoming video signal, whereby the video signal comprises only luminance or chrominance signals of the incoming video signal, or both. Filter unit 2 is preferably a so-called FIR-filter and most preferably a 2-tap FIR-filter. The filter unit comprises a line memory 4, adder means 5 and 6, and a multiplier 7. As will be understood by those skilled in the art, if filter unit 2 is a 2-tap-filter, as illustrated in Figure 2, the filter operation may be mathematically expressed as follows:

$$Y = kX_o + (1-k)X_{-1},$$

whereby $X_0$ represents a current line, $X_{-1}$ represents a line succeeding the current line and y represents the output of the filter unit. Factor k is applied by control unit 3 and, as is apparent from the above formula, determines the ratio by which a current line and the adjacent succeeding line are mixed to provide an interpolated line.

If there is no zooming, no additional lines to the lines already stored in field memory have to be generated, and so factor k can be selected with a value of 0 in order not to change the lines provided by field memory 1. If there is zooming the generation of additional lines is necessary. For example, to expand a picture received in the letterbox format, to a format matching the full size of the screen, it is necessary to generate additional lines by interpolating lines adjacent to the active part of the picture.

Control unit 3 is preferably a so-called phase accumulator unit, basically comprising a line address counter 8, an adder means 9 and a delay or register means 10. Since control unit 3 addresses, via line address counter 8, field memory 1, and simultaneously supplies factor k to multiplier 7 of filter unit 2, it controls which of the lines stored in field memory 1 are interpolated with each other, and according to which ratio.

As shown in Figure 2, controller unit 3 preferably comprises adder means 9 receiving at a first input an initial value or a zoom factor and, at a second input, the low 6 bits (0..5) output of register means 10. Register means 10 coupled to the output of the adder means 9 delays the input from adder means 9 by a time period corresponding to one line. Adder means 9 is preferably a seven bit adder and thus provides a seven bit word to register means 10. The seven bit output from register means 10 is split, in that the most significant bit is applied to line address counter 8, and the lower 6 bits (0..5) are applied to multiplier 7, of filter unit 2. These lower 6 bits are also applied to one of the inputs of the adder.

The phase accumulation means 3 is executed every output line. The physical distance between two lines of the input field is divided into 64 steps. Theoretically it is possible to generate at every step position an output line by interpolation. If a zooming factor from one to two is realised then, at maximum, two of these new interpolated output lines are required. Therefore, there is no need to generate a line at all 64 steps.

The output of control unit means 3 can be described by the following mathematical formulae:

$k_0 = INIT \bmod 64$
$k_n = (k_{n-1} + comp) \bmod 64 \ (n = 1,2,3,...)$
$la_0 = INIT \operatorname{div} 64$
$la_n = la_n + (k_{n-1} + comp) \operatorname{div} 64 \ (n = 1,2,3,...)$

where:

INIT = initial value, which depends on the field (A1,A1*,B1* or B1) generated
k = value given to multiplier means 7 (bit 0..5)
$k_0$ = k-factor for the first output line (line No. 0)
la = output of line address counter
n = output line number to be generated (n = 1,2...)
comp = compression factor (32...64)
mod = modulo operation (rest of division)
div = division operation (integer result of division)

The following example illustrates the above given formulae:

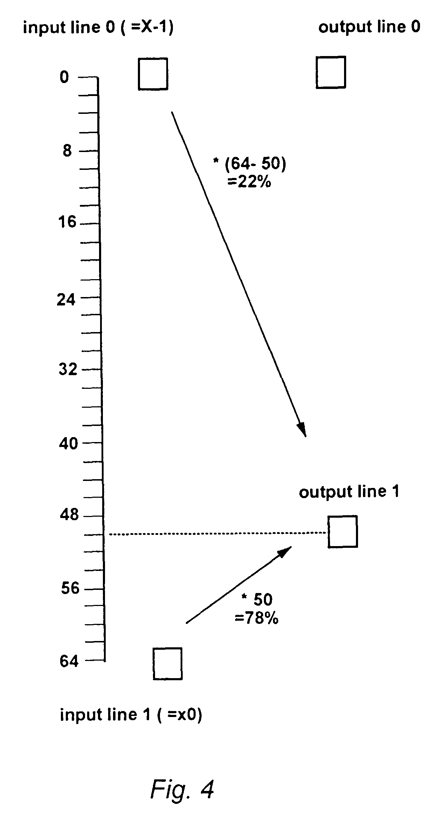

The output field is A1 and the compression factor is 50. This means that only 78% of the incoming picture is displayed (50/64 = 0.78; with an initial value for A1=64). In Figure 4, the generation of output field A1 with n=0 and n=1 is shown.

| n | $k_n$ | $1-k_n$ | la=output line of Field Memory | Output line of Line Memory |
|---|---|---|---|---|
| 0 | 0 | 64 | 1 | 0 |
| 1 | 50 | 14 | 1 | 0 |
| 2 | 36 | 28 | 2 | 1 |
| 3 | 22 | 42 | 3 | 2 |
| 4 | 8 | 56 | 4 | 3 |
| 5 | 58 | 6 | 4 | 3 |
| 6 | 44 | 20 | 5 | 4 |
| . . . | . . . | . . . | . . . | . . . |

The output field is A1* and the compression factor is 50. For output field A1* the initial value is (64 + comp/2) = 89.

| n | $k_n$ | $1-k_n$ | la=output line of Field Memory | Output line of Line Memory |
|---|---|---|---|---|
| 0 | 25 | 39 | 1 | 0 |
| 1 | 11 | 53 | 2 | 1 |
| 2 | 61 | 3 | 2 | 1 |
| 3 | 47 | 17 | 3 | 2 |
| 4 | 33 | 31 | 4 | 3 |
| 5 | 19 | 45 | 5 | 4 |
| 6 | 5 | 59 | 6 | 5 |
| . . . | . . . | . . . | . . . | . . . |

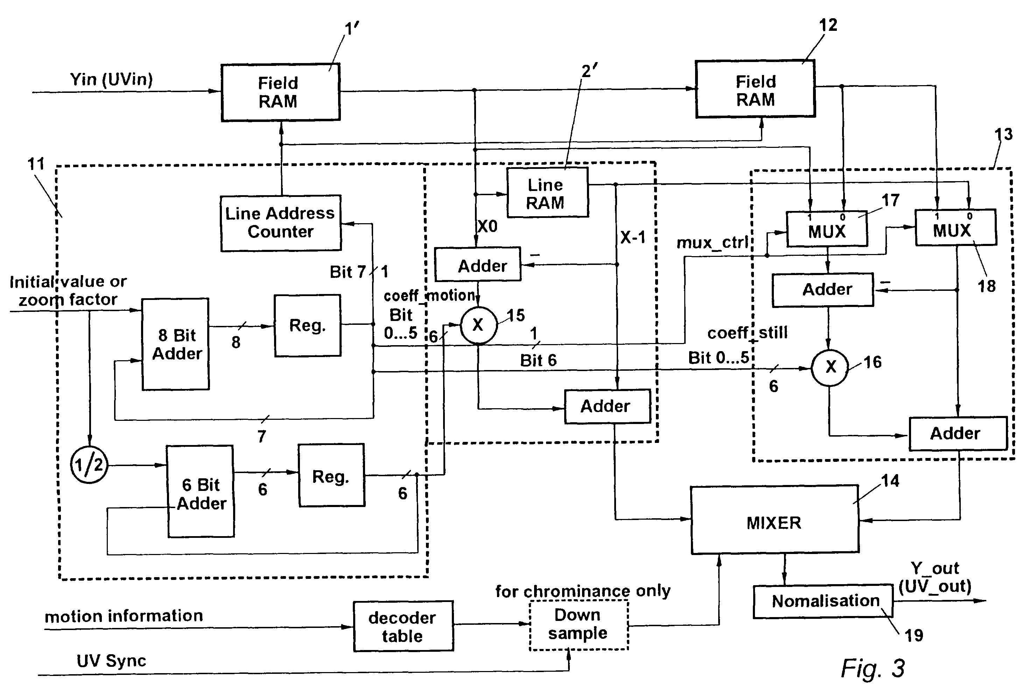

Figure 3 geometrically indicates a preferred embodiment of a circuit according to the present invention, combining motion adaptive up-conversion-, zooming- and panning-capabilities.

The circuit shown in Figure 3 comprises a field memory 1' and a filter unit 2', which basically provide the same function as units 1 and 2 of Figure 2. Unit 2 is preferably the 2-tap FIR-filter for intra-field interpolation, which result is used in case of motion. The circuit of Figure 3 further comprises a control unit 11 controlling the addressing of field memory 1' and filter unit 2', similar to control unit 3 in Figure 2. The circuit of Figure 3 additionally comprises a further field memory 12 and a further filter unit 13.

Unit 13 is preferably a 3-tap FIR-filter for intra-frame interpolation, which is used in case of no motion or slow motion. Preferably one coefficient of the 3-tap filter is always set to zero. Therefore, the 3-tap filter can be realised by a 2-tap FIR-filter with multiplexers means 17 and 18, which are described below.

Briefly explained, filter unit 13 performs a similar filter operation to that of filter unit 2' based however, on different input signals. Control unit 11 controls both, filter unit 2' and filter unit 13.

Mixer unit 14 combines the output of filter unit 2' and the output of filter unit 13 and outputs, through normalisation unit 19, the resultant video signal. The operation of mixer unit 14 is controlled by a motion signal supplied from a motion detection unit (not shown).

Basically, mixer 14 passes the output from filter unit 13 to its output if there is no motion, and passes the output signal from filter unit 2' to its output if there is maximum motion. In the case of intermediate motion values, mixer 14 combines the outputs of filter units 2' and 13.

As shown in Figure 3, control unit 11 applies a control signal to filter unit 2' and filter unit 13. These control signals are preferably supplied to multiplier 15 and multiplier 16 respectively.

The phase accumulation means 11 is executed for every output line. The physical distance between two lines of the output field is divided into 128 steps. Theoretically, it is possible to generate at every step position an output line by interpolation. If a zooming factor from one to two is realised then, at maximum, in 100/120 Hz mode two, and in 50/60 Hz mode, four of these new interpolated output lines are required. Therefore, there is no need to generate a line at all 128 steps.

The output of control unit means 11 can be described by the following mathematical formulae:

6 Bit Adder and Reg:

$$km_0 = INIT/2 \bmod 64$$
$$km_n = (k_{n-1} + comp/2)\bmod 64 \ (n = 1,2,3,...)$$

8 Bit Adder and Reg:

$$temp_0 = INIT \bmod 128$$
$$temp_n = (temp_{n-1} + comp)\bmod 128 \ (n = 1,2,3,...)$$
$$knm_n = temp_n \bmod 64 \ (n = 0,1,2,3,...)$$
$$mux_n = temp_n \ div \ 64 \ (n = 0,1,2,3,...)$$
$$la_0 = INIT \ div \ 128$$
$$la_n = la_{n-1} + (k_{n-1} + comp) \ div \ 128 \ (n = 1,2,3,..)$$

where:

INIT = initial value, which depends on the field to be generated (A1,A1*,B1* or B1)
km = value given to multiplier means 15 (bit 0..5)
$km_0$ = k-factor for multiplier means 15 of the first output line
temp = temporal variable
knm = value given to multiplier means 16 (bit 0..5)
mux = mux_ctrl, signal to control multiplexers means 17 and 18
la = output of line address counter
n = output line number to be generated (n=0,1,2..)
comp = compression factor (64,68,72...128)
mod = modulo operation (rest of division)
div = division operation (integer result of division)

The output of the line address counter is given to the field memory means 1. The address, which is given to field memory means 12 can differ by one line, dependent of the field (A1,A1*,B1* or B1) to be generated.

The two multiplexers (17, 18) are controlled by a mux_ctrl signal. If the mux_ctrl signal is "0" then the output of the line memory means 2 and the output of the field memory means 12 is applied to the filter means 13. If the mux_ctrl signal is "1" then the output of the field memory means 1 and the output of the line memory means 2 is applied to the filter means 13.

The following example may illustrate the above given formulae.

If output field is A1 and the compression factor is 100, only 78% of the incoming picture is displayed (since 100/64 = 0.78 with an initial value for A1 = 128)

| n | $km_n$ | $64-km_n$ | $temp_n$ | $knm_n$ | $64-knm_n$ | $mux_0$ | la = output line of Field Memory means 1 | Output line of Line Memory means 2 | Output line of Field Memory means 12 |
|---|---|---|---|---|---|---|---|---|---|
| 0 | 0 | 64 | 0 | 0 | 64 | 0 | 1 | 0 | 0 |
| 1 | 50 | 14 | 100 | 36 | 28 | 1 | 1 | 0 | 0 |
| 2 | 36 | 28 | 72 | 8 | 56 | 1 | 2 | 1 | 1 |
| 3 | 22 | 42 | 44 | 44 | 29 | 0 | 3 | 2 | 2 |
| 4 | 8 | 56 | 16 | 16 | 48 | 0 | 4 | 3 | 3 |
| 5 | 58 | 6 | 116 | 52 | 12 | 1 | 4 | 3 | 3 |
| 6 | 44 | 20 | 88 | 24 | 40 | 1 | 5 | 4 | 4 |
| ... | ... | ... | ... | ... | ... | ... | ... | ... | ... |

The output field is A1* and the compression factor is 100.

For output field A1* the initial value is (128+comp/2)=178.

| n | $km_n$ | $64-km_n$ | $temp_n$ | $knm_n$ | $64-knm_n$ | $mux_0$ | la = output line of Field Memory means 1 | Output line of Line Memory means 2 | Output line of Field Memory means 12 |
|---|---|---|---|---|---|---|---|---|---|
| 0 | 25 | 39 | 50 | 50 | 14 | 0 | 1 | 0 | 0 |
| 1 | 11 | 53 | 22 | 22 | 42 | 0 | 2 | 1 | 1 |
| 2 | 61 | 3 | 122 | 58 | 6 | 1 | 2 | 1 | 1 |
| 3 | 47 | 17 | 94 | 30 | 34 | 1 | 3 | 2 | 2 |
| 4 | 33 | 31 | 66 | 2 | 62 | 1 | 4 | 3 | 3 |
| 5 | 19 | 45 | 38 | 38 | 26 | 0 | 5 | 3 | 3 |
| 6 | 5 | 59 | 10 | 10 | 54 | 0 | 6 | 4 | 4 |
| . . . | . . . | . . . | . . . | . . . | . . . | . . . | . . . | . . . | . . . |

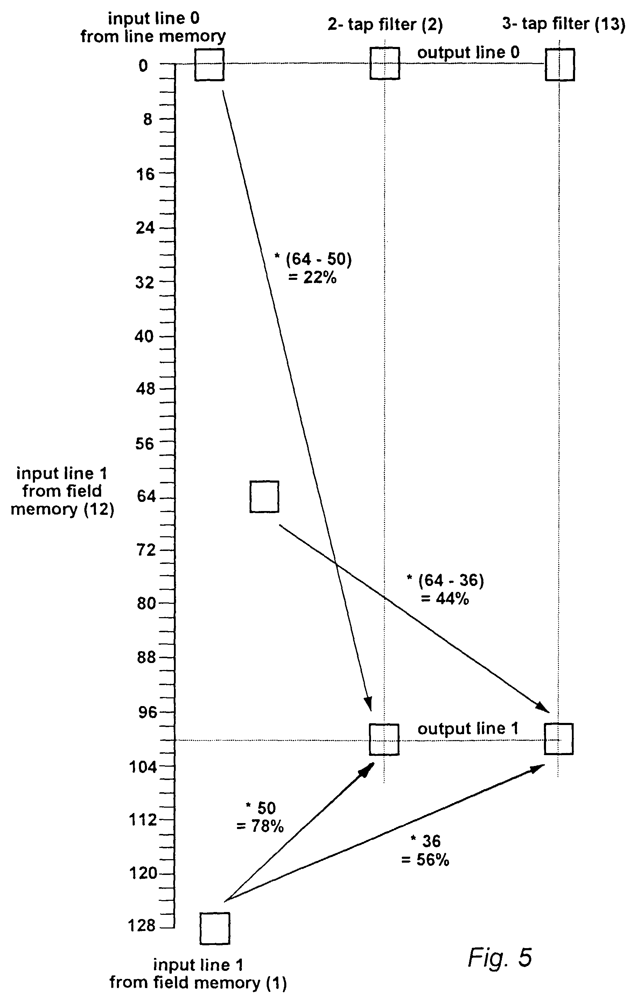

Figure 5 illustrates the generation of output field A1 with n=0 and n=1. In the second column the output of the 2-tap filter means is shown and in the third column the output of the 3-tap filter means 13 is shown.

As mentioned, the circuit according to Figure 3 combines up-conversion capabilities with zooming and panning capabilities. Thereby the circuit according to Fig. 3 is able to perform interlaced scan conversion and progressive scan conversion.

The principle operation of the circuit shown in Figure 3 for different situations, i.e. as interlaced scanning or progressive scanning, zooming or no zooming, motion or no motion (still), will be explained in connection with the following Tables 1 and 2.

| incoming video fields | B0 | A1 | | B1 | | A2 |
|---|---|---|---|---|---|---|
| output video fields | ■ | A1 | A1* | B1* | B1 | A2 |
| **used data for interpolation in case of:** | | | | | | |
| 1. no zoom and motion | | A1 | A1, A1 LD | B1, B1LD | B1 | |
| 2. no zoom and still | | A1 | B0 | A1 | B1 | |
| 3. zoom and motion | | A1, A1LD | A1, A1LD | B1, B1LD | B1, B1LD | |
| 4. zoom and still | | A1, A1LD, B0 | A1, A1LD, B0 | A1, B1, B1LD | A1, B1, B1LD | |

LD: line delay
this is for a geometical offset

**Table 1: incoming video data for 120 / 100 Hz interlaced scan conversion**

| incoming video fields | B0 | A1 | B1 | A2 |
|---|---|---|---|---|
| output video fields | ■ | A1 / A1* | B1* / B1 | A2 / A2* |
| **used data for interpolation in case of:** | | | | |
| 1. no zoom and motion | | A1, A1LD | B1, B1LD | |
| 2. no zoom and still | | A1, B0 | A1, B1 | |
| 3. zoom and motion | | A1, A1LD | B1, B1LD | |
| 4. zoom and still | | A1, A1LD, B0 | A1, B1, B1LD | |

LD: line delay
this is for a geometical offset

**Table 2: incoming video data for 50 / 60 Hz progressive scan conversion**

Table 1 concerns the operation of the circuit with regard to interlaced scanning and in particular for 100/120 Hz interlaced scan conversion.

As mentioned above, in the case of interlace scanning, the amount of fields is doubled, in that during the time period of a field A1 of an incoming video signal, two fields A1, A1* are generated and displayed.

In the case of no zooming and no motion (still) in the picture, sub-field A1 is identical to incoming field A1 and sub-field A1* is identical to the previous incoming field BO (situation 2).

In the case of no zooming, but with motion, sub-field A1 is identical to incoming field A1, the lines of sub-field A1* are however, generated by interpolating adjacent lines of incoming field A1. This is indicated in Table 1 by the expression A1,A1LD, whereby LD designates "line delay" (situation 1).

In the case of zooming and motion, the lines of both sub-fields A1 and A1* are generated by interpolating respective adjacent lines of incoming field A1 (situation 3).

In the final case of Table 1, a situation with zooming and no motion (still) (situation 4), lines of sub-fields A1 and A1* are generated by interpolating adjacent lines of incoming field A1 and lines of previous field B0. Although explained in more detail herein below, it should be mentioned that interpolation between lines of adjacent incoming fields A1 and B0 is achieved by the operation of multiplexer 17 and 18 of filter unit 13.

Table 2 illustrates the situation in the case of progressive scan conversion. As mentioned above, in the case of progressive scan conversion, each incoming field is, by interpolation, expanded into a frame whereby all lines of the resultant frame are displayed during the same field period.

Table 2 shows the manner in which individual lines of frames A1/A1* and B1*/B1 are generated for the mentioned four different situations.

In case of 100/120 Hz interlaced scan conversion and output field A1 and A1*, the output data of field memory means 1 is data of input field A1 and the output data of the line memory means 2 is input field A1 one line delayed. The output of field memory means 12 is the input field B0. Thus, the input of the 2-tap filter means 2 is input field A1 and input field A1 one line delayed (A1LD). One coefficient of the 3-tap filter is preferably always set to zero, in that it can be realised by a 2-tap filter with multiplexers.

In case of output field B1* and B1, the output data of field memory means 1 is data of input field B1 and the output data of the line memory means 2 is input field B1 one line delayed. The output of field memory means 12 is input field A1. Thus, the input of the 2-tap filter means 2 is input field B1 and input field B1 one line delayed (B1LD). The input of the 3-tap filter means 13 is input field B1 and B1LD and the input field A1. One coefficient of the 3-tap filter is preferably always set to zero, in that it can be realised by a 2-tap filter with multiplexers.

**Claims**

1. Digital signal processing circuit for a television receiver comprising:

   a first field memory (1') for storing input data representative of the chrominance or luminance portion of one field,

   first interpolation means (2') for generating interpolated line data based on line data received from said first field memory (1'),

   zooming and up-conversion control means (11) for controlling the read-out of line data from said first field memory (1') and the interpolation performed by said interpolation means based on a zoom factor input to said zooming and up-conversion control means (11),

   **characterised in that**

   said digital signal processing circuit further comprises:

   a second field memory (12), a second interpolation means (13) and a mixer means (14), wherein,

   said second field memory (12) is coupled to the output of the first field memory (1'),

   said second interpolation means (13) receives as a first input the output of the second field memory (12), as a second input the output of the first field memory (1') and as a third input a one-line delayed version of the output of the first field memory and generates, based on either the first and second or the first and third inputs, interpolated line data,

   said mixer means (14) receives the output data from the first and the second interpolation means (2', 13) and generates output data based on the two inputs and based on a motion signal supplied by a motion detection unit.

2. Digital signal processing circuit according to claim 1, wherein said first interpolation means (2') is a FIR-filter, preferably a 2-tap FIR-filter.

3. Digital signal processing circuit according to claim 1 or 2, wherein said second interpolation means (13) is a FIR-filter and preferably a 2-tap FIR-filter.

4. Digital signal processing circuit according to claim 2 or 3, wherein said FIR-filter comprises weighting means (7, 16) which are controlled by said zooming and up-conversion control means (11).

5. Digital signal processing circuit according to claim 3 or 4 wherein said FIR-filter of said second interpolation means (13) comprises multiplexer means (17, 18) for passing either the first and second or first and third input to the FIR-filter.

6. Digital signal processing circuit according to one of the claims 1 to 5, wherein said zooming and up-conversion means (11) controls the weighting operation performed within the first interpolation means (2') and the weighting operation performed by the second interpolation means (13) and further controls the switching of the multiplexer (17, 18) contained in the second interpolation means (13).

7. Digital signal processing circuit according to one of the preceding claims, wherein said interpolation means (2') comprises at least one line memory for outputting a one-line delayed version of the current line data output from the first field memory (1').

8. Digital signal processing circuit according to one of the claims 1 to 7, wherein the third input to the second interpolation means (13) is provided by a line delay means comprised in the first interpolation means (2').

9. Digital signal processing circuit according to one of the preceding claims, wherein said zooming and up-conversion control means (11) determines the first line data to be read out from the first field memory (1') in accordance with a received active area signal so that only relevant line data is supplied to the interpolation means (2').

10. Digital signal processing circuit according to one of the preceding claims, wherein said zooming and up-conversion control means (11) comprises adder means (9), line delay means (10) and line address counter means (8), wherein

said adder means (9) receives said zoom factor as a first input and provides output data to said line delay means (10),

said line delay means (10) provides output data to said interpolation means (2'), 13) and to said adder means (9) as a second input thereof,

said line address counter (8) receives the MSB from the output of the line delay means (10) and controls by its output the read-out of the first field memory (1').

11. Digital signal processing circuit according to claim 10, wherein said adder means (9) is a 7-bit adder and said line delay means (10) provides the six lower bits of its output to the second input of the adder means (9) and to the interpolation means (2', 13) and provides the most significant bit of its output to said line address counter means (8).

**Patentansprüche**

1. Digitaler Signalverarbeitungsschaltkreis für einen FIRnsehempfänger mit:

einem ersten Halbbildspeicher (1') zur Speicherung von Eingangsdaten eines Chrominanz- oder Luminanzanteils eines Halbbildes,

eine erste Interpolationseinrichtung (2') zur Erzeugung interpolierter Zeilendaten basierend auf Zeilendaten, die von dem ersten Halbbildspeicher (1') erhalten wurden,

eine Zoom- und Up-Conversions-Steuereinrichtung (11) zur Steuerung des Auslesens von Zeilendaten aus dem ersten Halbbildspeicher (1') und der Interpolation, die von der Interpolationseinrichtung basierend auf einer Zoomfaktoreingabe an die Zoom- und Up-Conversions-Steuereinrichtung (11) durchgeführt wird,

**dadurch gekennzeichnet,** daß

der digitale Signalverarbeitungsschaltkreis außerdem umfaßt:

einen zweiten Halbbildspeicher (12), eine zweite Interpolationseinrichtung (13) und eine Mischeinrichtung (14), wobei

der zweite Halbbildspeicher (12) mit dem Ausgang des ersten Halbbildspeichers (1') verbunden ist,

die zweite Interpolationseinrichtung (13) als erste Eingabe die Ausgabe des zweiten Halbbildspeichers (12), als zweite Eingabe die Ausgabe des ersten Halbbildspeichers (1') und als dritte Eingabe eine um eine Zeile verzögerte Version der Ausgabe des ersten Halbbildspeichers erhält und basierend entweder auf der ersten und zweiten oder der ersten und dritten Eingabe interpolierte Zeilendaten erzeugt,

die Mischeinrichtung (14) die Ausgabedaten von der ersten und zweiten Interpolationseinrichtung (2', 13) erhält und Ausgabedaten basierend auf den beiden Eingaben und basierend auf einem Bewegungssignal erzeugt, das von einer Bewegungserfassungseinheit zugeführt wird.

2. Digitaler Signalverarbeitungsschaltkreis nach Anspruch 1, wobei die erste Interpolationseinrichtung (2') ein FIR-Filter ist, vorzugsweise ein 2-Tap FIR-Filter.

3. Digitaler Signalverarbeitungsschaltkreis nach Anspruch 1 oder 2, wobei die zweite Interpolationseinrichtung (13) ein FIR-Filter und vorzugsweise ein 2-Tap FIR-Filter ist.

4. Digitaler Signalverarbeitungsschaltkreis nach Anspruch 2 oder 3, wobei das FIR-Filter eine Gewichtungseinrichtung (7, 16) umfaßt, die von der Zoom- und Up-Conversions-Steuereinrichtung (11) gesteuert wird.

5. Digitaler Signalverarbeitungsschaltkreis nach Anspruch 3 oder 4, wobei das FIR-Filter der zweiten Interpolationseinrichtung (13) Multiplexeinrichtungen (17, 18) zur Weiterleitung entweder der ersten und zweiten oder ersten und dritten Eingabe an das FIR-Filter umfaßt.

6. Digitaler Signalverarbeitungsschaltkreis nach einem der Ansprüche 1 bis 5, wobei die Zoom- und Up-Conversions-Einrichtung (11) die Gewichtungsoperation, die in der ersten Interpolationseinrichtung (2') ausführt wird, und die Gewichtungsoperation, die von der zweiten Interpolationseinrichtung (13) ausgeführt wird, steuert und außerdem die Umschaltung der Multiplexer (17, 18) steuert, die in der zweiten Interpolationseinrichtung (13) enthalten sind.

7. Digitaler Signalverarbeitungsschaltkreis nach einem der vorhergehenden Ansprüche, wobei die Interpolationseinrichtung (2') zumindest einen Zeilenspeicher zur Ausgabe einer um eine Zeile verzögerten Version der aktuellen Zeilendaten, die von dem ersten Halbbildspeicher (1') ausgegeben werden, umfaßt.

8. Digitaler Signalverarbeitungsschaltkreis nach einem der Ansprüche 1 bis 7, wobei die dritte Eingabe an die zweite Interpolationseinrichtung (13) von einer Zeilenverzögerungseinrichtung bereitgestellt wird, die in der ersten Interpolationseinrichtung (2') enthalten ist.

9. Digitaler Signalverarbeitungsschaltkreis nach einem der vorhergehenden Ansprüche, wobei die Zoom- und Up-Conversions-Steuereinrichtung (11) die ersten Zeilendaten, die aus dem ersten Halbbildspeicher (1') auszulesen sind, in Übereinstimmung mit einem empfangenen Aktivbereichsignal festlegt, so daß nur relevante Zeilendaten der Interpolationseinrichtung (2') zugeführt werden.

10. Digitaler Signalverarbeitungsschaltkreis nach einem der vorhergehenden Ansprüche, wobei die Zoom- und Up-Conversions-Steuereinrichtung (11) eine Addiereinrichtung (9), eine Zeilenverzögerungseinrichtung (10) und eine Zeilenadresszähleinrichtung (8) umfaßt, wobei

die Addiereinrichtung (9) den Zoomfaktor als erste Eingabe erhält und Ausgabedaten an die Zeilenverzögerungseinrichtung (10) bereitstellt,

die Zeilenverzögerungseinrichtung (10) Ausgangsdaten an die Interpolationseinrichtung (2', 13) und an die Addiereinrichtung (9) als zweite Eingabe bereitstellt,

der Zeilenadresszähler (8) das MSB von der Ausgabe der ersten Zeilenverzögerungseinrichtung (10) erhält und durch seine Ausgabe das Auslesen des ersten Halbbildspeichers (1') steuert.

11. Digitaler Signalverarbeitungsschaltkreis nach Anspruch 10, wobei die Addiereinrichtung (9) ein 7-Bit Addierer ist und die Zeilenverzögerungseinrichtung (10) die sechs unteren Bits ihrer Ausgabe an den zweiten Eingang der Addiereinrichtung (9) und die Interpolationseinrichtung (2', 13) führt, und das höchstwertige Bit ihrer Ausgabe an die Zeilenadresszähleinrichtung (8) führt.

**Revendications**

1. Circuit de traitement de signal digital pour un récepteur de télévision comprenant :

   - une première mémoire de trame (1') permettant de stocker des données d'entrée représentatives de la partie chrominance ou luminance d'une trame,
   - un premier moyen d'interpolation (2') permettant de générer des données de lignes interpolées en fonction des données de lignes reçues de ladite mémoire de trame (1'),
   - un moyen de contrôle de zoom et de transposition de fréquence (11) permettant de contrôler la lecture des données de lignes provenant de ladite mémoire de trame (1') et l'interpolation exécutée par ledit moyen d'interpolation en fonction d'une entrée de facteur d'agrandissement sur lesdits moyens de contrôle de zoom et de transposition de fréquence (11),

   caractérisé en ce que
      ledit circuit de traitement de signal digital comprend en outre :

- une deuxième mémoire de trame (12), un deuxième moyen d'interpolation (13) et un moyen combinateur (14) où,
- ladite deuxième mémoire de trame (12) est couplée à la sortie de la première mémoire de trame (1'),
- ledit deuxième moyen d'interpolation (13) reçoit comme une première entrée la sortie de la deuxième mémoire de trame (12), comme une deuxième entrée la sortie de la première mémoire de trame (1') et comme une troisième entrée une version retardée d'une ligne de la sortie de la première mémoire de trame et génère, en fonction de la première et de la deuxième ou de la première et de la troisième entrées, des données de lignes interpolées,
- ledit moyen combinateur (14) reçoit les données de sortie des premier et deuxième moyens d'interpolation (2', 13) et génère des données de sortie en fonction des deux entrées et d'un signal de mouvement fourni par une unité de détection de mouvement.

2. Circuit de traitement de signal digital selon la revendication 1, dans lequel ledit premier moyen d'interpolation (2') est un filtre à réponse impulsionnelle finie, de préférence un filtre à réponse impulsionnelle finie à 2 prises.

3. Circuit de traitement de signal digital selon la revendication 1 ou 2, dans lequel ledit deuxième moyen d'interpolation (13) est un filtre à réponse impulsionnelle finie, de préférence un filtre à réponse impulsionnelle finie à 2 prises.

4. Circuit de traitement de signal digital selon la revendication 2 ou 3, dans lequel ledit filtre à réponse impulsionnelle finie comprend des moyens de pondération (7, 16) qui sont contrôlés par ledit moyen de contrôle de zoom et de transposition de fréquence (11) .

5. Circuit de traitement de signal digital selon la revendication 3 ou 4, dans lequel ledit filtre à réponse impulsionnelle finie dudit deuxième moyen d'interpolation (13) comprend des moyens multiplixeurs (17, 18) permettant de transmettre la première et la deuxième ou la première et la troisième entrées au filtre à réponse impulsionnelle finie.

6. Circuit de traitement de signal digital selon l'une quelconque des revendications 1 à 5, dans lequel ledit moyen de contrôle de zoom et de transposition de fréquence (11) contrôle l'opération de pondération exécutée dans le premier moyen d'interpolation (2') et l'opération de pondération exécutée dans le deuxième moyen d'interpolation (13) et contrôle, en outre, la commutation du multiplexeur (17, 18) placé dans le deuxième moyen d'interpolation (13).

7. Circuit de traitement de signal digital selon l'une quelconque des revendications précédentes, dans lequel ledit moyen d'interpolation (2') comprend au moins une mémoire de lignes permettant de sortir une version retardée d'une ligne par rapport à la sortie de données de lignes courante provenant de la première mémoire de trame (1').

8. Circuit de traitement de signal digital selon l'une quelconque des revendications 1 à 7, dans lequel la troisième entrée sur le deuxième moyen d'interpolation (13) est fournie par un moyen de retard de ligne placé dans le premier moyen d'interpolation (2').

9. Circuit de traitement de signal digital selon l'une quelconque des revendications précédentes, dans lequel ledit moyen de contrôle de zoom et de transposition de fréquence (11) détermine la première donnée de lignes à lire à partir de la première mémoire de trame (1') en fonction d'un signal de surface active reçu de façon à ce que seules les données de lignes appropriées soient fournies au moyen d'interpolation (2').

10. Circuit de traitement de signal digital selon l'une quelconque des revendications précédentes, dans lequel ledit moyen de contrôle de zoom et de transposition de fréquence (11) comprend un moyen additionneur (9), un moyen de retard de ligne (10) et un moyen compteur d'adresse de ligne (8), dans lequel :

- ledit moyen additionneur (9) reçoit ledit facteur d'agrandissement comme une première entrée et fournit des données de sortie audit moyen de retard de ligne (10),
- ledit moyen de retard de ligne (10) fournit- des données de sortie audits moyens d'interpolation (2', 13) et audit moyen additionneur (9) comme une deuxième entrée,
- ledit moyen compteur d'adresse de ligne (8) reçoit le bit de poids le plus fort de la sortie du moyen de retard de ligne (10) et contrôle par l'intermédiaire de sa sortie la lecture de la première mémoire de trame (1').

11. Circuit de traitement de signal digital selon la revendication 10, dans lequel ledit moyen additionneur (9) est un additionneur pour 7 bits et ledit moyen de retard de ligne (10) fournit les six bits inférieurs de sa sortie à la deuxième entrée du moyen additionneur (9) et aux moyens d'interpolation (2', 13) et fournit le bit de poids le plus fort de sa sortie audit moyen compteur d'adresse de ligne (8).

*Fig. 1a*

50 / 60 Hz
interlaced ( 2:1 )

A

B

A

*Fig. 1b*

100 / 120 Hz
interlaced ( 2:1 )

A

A*

B*

B

A

A

*Fig. 1c*

50 / 60 Hz
proscan ( 1:1 )

A / A*

B* / B

A / A*

y

t

x

Fig. 2

EP 0 802 671 B1

Fig. 3

input line 0 ( =X-1)          output line 0

0 —

8 —

* (64- 50)
=22%

16 —

24 —

32 —

40 —

output line 1

48 —

* 50
=78%

56 —

64 —

input line 1 ( =x0)

*Fig. 4*

Fig. 5